# EUROPEAN PATENT SPECIFICATION

(11) **EP 3 276 988 B1**
(45) Date of publication and mention of the grant of the patent: **22.04.2020**
(21) Application number: 16768020.6
(22) Date of filing: 17.03.2016
(51) Int. Cl.: H04W 4/02, H04W 36/04, H04W 84/10, H04W 92/12, H04W 64/00, H04W 84/04, H04W 36/08, H04W 36/00

(54) **COMMUNICATION SYSTEM AND METHOD OPTIMIZING HANDOVER CONTROL**
KOMMUNIKATIONSSYSTEM UND VERFAHREN ZUR OPTIMIERUNG DER ÜBERGABESTEUERUNG
SYSTÈME DE COMMUNICATION ET PROCÉDÉ OPTIMISANT LE CONTRÔLE DE TRANSFERT

(30) Priority: 25.03.2015 JP 2015061848
(43) Date of publication of application: 31.01.2018
(73) Proprietor: NEC Corporation, Tokyo 108-8001 (JP)
(72) Inventor: OKADA, Masaaki, Tokyo 108-8001 (JP)
(74) Representative: MacDougall, Alan John Shaw
(86) International application number: PCT/JP2016/001546
(87) International publication number: WO 2016/152113

(56) References cited:
- EP-A1- 2 469 927
- WO-A1-2013/153854
- JP-A- 2010 119 131
- US-A1- 2011 256 872
- "3 Generation Partnership Project; Technical Specification Group Radio Access Network; Evolved Universal Terrestrial Radio Access Network (E-UTRAN); S1 Application Protocol (S1AP) (Release 12)", 3GPP STANDARD; 3GPP TS 36.413, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V12.5.0, 21 March 2015 (2015-03-21), pages 1-301, XP050927996, [retrieved on 2015-03-21]
- '3rd Generation Partnership Project; Technical Specification Group Radio Access Network; Evolved Universal Terrestrial Radio Access Network (E-UTRAN) ; S1 Application Protocol (S1 AP ) (Release 12' 3GPP TS 36.413 V12.5.0 March 2015, pages 48 - 50 , 69 TO 71, 95, 108, 129, XP055316185

## Description

### [Technical Field]

The present invention relates to a communication apparatus, a communication system, and a control method in a radio communication network.

### [Background Art]

There are various services to be provided to terminal devices depending on locations of the terminal devices. Therefore, a base station or the like needs to collect and notify information on a current location of a terminal device. NPL 1 discloses Information Element (Request Type) that includes a condition for a base station to transmit, to an uplink device, the information on the location of the terminal device (hereinafter referred to as "the location information on the terminal device"). Specifically, an MME (Mobility Management Entity) designates a condition (Event parameter on Request Type IE) for the eNB (eNodeB) to transmit, to the MME, the location information on the terminal device. The eNB transmits, to the MME, the location information on the terminal device according to the designation.

Hereinafter, descriptions are based on an example in which an MME designates a condition (Event parameter) that an eNB transmits a location information on a terminal to the MME, and the eNB transmits the location information to the MME at each time a serving cell is changed. The terminal device conducts a handover (hereinafter referred to as "Handover" or "HO") from the eNB (also referred to as "source eNB") to another eNB (also referred to as "Target eNB"), so that the serving cell is changed. Conduction of the handover by the terminal device enables satisfying the condition for the eNB to transmit the location information on the terminal device to the MME, and therefore, a handover-destination eNB transmits the location information on the terminal device to the MME.

### [Citation List]

### [Patent Literature]

[PTL 1] Japanese Unexamined Patent Publication (Kokai) No.2013-051670

### [Non Patent Literature]

[NPL 1] 3GPP TS36.413 v12.5.0
[NPL 2] 3GPP TS36.300 v12.4.0

US 2011/256872 discloses an apparatus and a method for a handover in a mobile communication system. A method for an operation of a gateway in a mobile communication system includes receiving a message informing of a handover of a User Equipment (UE) from a Base Station (BS), determining whether the handover could be terminated at the gateway, and if it is determined the handover could be terminated at the gateway, performing the handover with the handover being terminated at the gateway.

### [Summary of Invention]

### [Technical Problem]

In the meantime, NPL 2 discloses an HeNB-GW (Home eNodeB GateWay) that aggregates one or more HeNBs (Home eNodeB). The HeNB-GW has a function to terminate a processing of S1 Path Switch message at the time of an X2HO between subordinate HeNBs.

In an architecture which does not have any gateway between the base station and the uplink device, each device can transmit and receive the location information on the terminal device by the operation disclosed in NPL 1. On the other hand, NPLs 1 and 2 do not disclose at all, in the architecture which has the gateway between the base station and the uplink device, how the gateway operates to transmit the location information on the terminal device when the terminal device conducts the X2HO from the base station that is not under the gateway (hereinafter referred to as "external base station") to the base station that is under the gateway.

Therefore, in the architecture which has the gateway between the base station and the uplink device, the gateway may not determine whether to transmit, to the uplink device, the location information on the terminal device when the terminal device conducts the X2HO from an external base station to the base station that is under the gateway. In other words, in the architecture which has the gateway between the base station and the uplink device, when the terminal device conducts the X2HO from the external base station to the base station under the gateway, the gateway may not appropriately transmit, to the uplink device, the location information on the terminal device when terminating the processing of the S1 Path Switch message that is transmitted from a destination base station at the time of the X2HO between the base stations under the gateway.

Further, using an alternative expression, it can also be said that the base station cannot transmit, to the gateway, information for determining whether to transmit, to the uplink device, the location information on the terminal device when the terminal device conducts the X2HO from the external base station to the base station that is under the gateway.

The present invention provides a radio communication system, and a method in a radio communication system, as set out in the appended claims.

The Second Example Embodiment, disclosed in paragraphs [0050]-[0068], is not covered by the appended claims, and is therefore considered not being part of the present invention.

### [Solution to Problem]

Also disclosed is a base station connected with a gateway that is also connected with another base station, the base station comprises:
a receiving unit that receives a message from the gateway; and
a transmitting unit that transmits, to the gateway, a Path Switch Request message that includes a Request Type IE and at least either one of an ECGI and a TAI indicating a location of a terminal device when the terminal device is moved from a cell covered by the another base station.

Also disclosed is a base station connected with a gateway that is also connected with another base station, the base station comprises:
a receiving unit that receives a message from the gateway; and
a transmitting unit that transmits, to the gateway, first information on a location of a terminal device and second information on a change of a cell when the terminal device is moved from the cell covered by the another base station.

Also disclosed is a gateway in a communication system comprising a first base station, a second base station, the gateway connected with the first base station and the second base station, and an uplink device connected with the gateway, the gateway comprises:
a receiving unit that receives a Path Switch Request message from the second base station when a terminal device moves from a cell covered by the first base station to a cell covered by the second base station; and
a transmitting unit that transmits, to the uplink device, the terminal device's location information that is included in the Path Switch Request message.

### [Advantageous Effects of Invention]

According to the above described examples, the gateway can appropriately transmit information on the location of the terminal device, in the architecture which has the gateway between the base station and the uplink device.

### [Brief Description of Drawings]

Fig.1 is a configuration diagram of a communication system according to first example embodiment.
Fig.2 is a block diagram of a base station according to the first example embodiment.
Fig.3 is a block diagram of a gateway according to the first example embodiment.
Fig.4 is an example of Request Type according to the first example embodiment.
Fig.5 is an example of Path Switch Request message according to the first example embodiment.
Fig.6 is a sequence diagram of operations of the communication system according to the first example embodiment.
Fig.7 is the configuration diagram of the communication system according to the first example embodiment.
Fig.8 is a block diagram of a gateway according to a second example embodiment.
Fig.9 is a sequence diagram of operations of a communication system according to the second example embodiment.
Fig.10 is a block diagram of a gateway.

### [Description of Embodiments]

Hereinafter, specific example embodiments are described in details with reference to the drawings. In each drawing, an identical or corresponding component is denoted by an identical reference numeral, and duplicated description is omitted as needed to clarify the description.

A plurality of example embodiments described below may be carried out independently or appropriately combined to be carried out. The plurality of example embodiments have new features which are different from one another. Therefore, the plurality of example embodiments are used for achieving objects or solving problems which are different from one another, and are used for yielding advantageous effects which are different from one another.

### <First Example Embodiment>

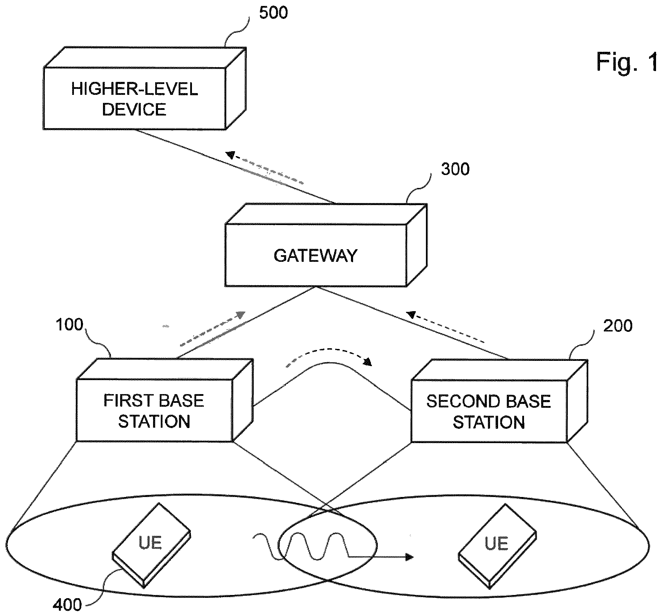

Fig.1 illustrates a configuration example of the communication system according to the present example embodiment. The communication system provides a communication service, for example, sound communication or packet data communication, or both thereof. Referring to Fig.1, the communication system includes a first base station 100, a second base station 200, a gateway 300, a terminal device (also referred to as UE or User Equipment) 400 and an uplink device 500.

Note that the gateway 300 has a function to terminate the first base station 100 and the second base station 200. Further, the uplink device 500 is connected with the gateway 300.

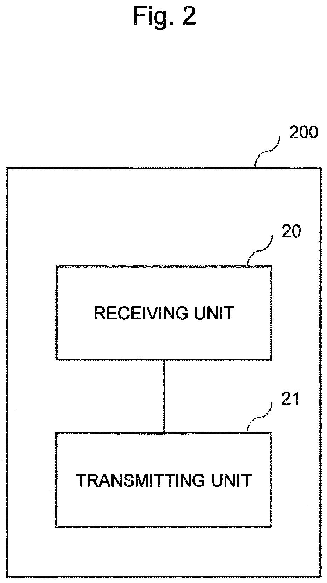

Fig.2 illustrates an example configuration of the second base station 200 according to the present example embodiment.

The second base station 200 has at least a receiving unit 20 and a transmitting unit 21.

The receiving unit 20 is connected to external devices in a wired or wireless manner and receives various pieces of information from the external devices. In the present example embodiment, the receiving unit 20 can receive various messages at least from the gateway 300.

The transmitting unit 21 transmits, to the gateway 300, information on the condition (Event parameter of Request Type IE) for the gateway 300 to transmit, to the uplink device 500, information on the location of the terminal device 400 (hereinafter referred to as "the location information on the terminal device 400") (hereinafter referred to as "condition information"). Note that, when the terminal device 400 moves from the first base station 100 to the second base station 200, the transmitting unit 21 transmits the condition information to the gateway 300. Specifically, for example, after the second base station 200 receives Handover Requset message from the first base station 100 and then transmits Handover Requset ACK message to the first base station 100, the transmitting unit 21 may transmit the condition information to the gateway 300.

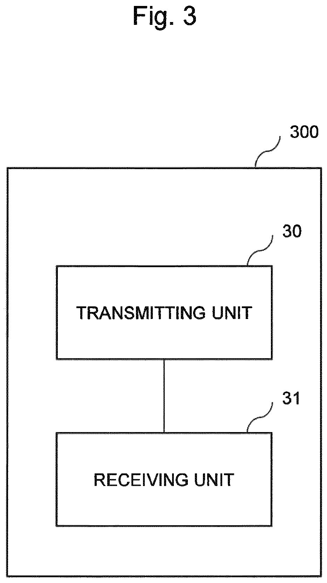

Fig.3 illustrates a configuration example of the gateway 300 according to the present example embodiment.

The gateway 300 at least includes a transmitting unit 30 and a receiving unit 31.

The transmitting unit 30 can transmit various messages to the second base station 200.

The receiving unit 31 receives the condition information from the second base station 200.

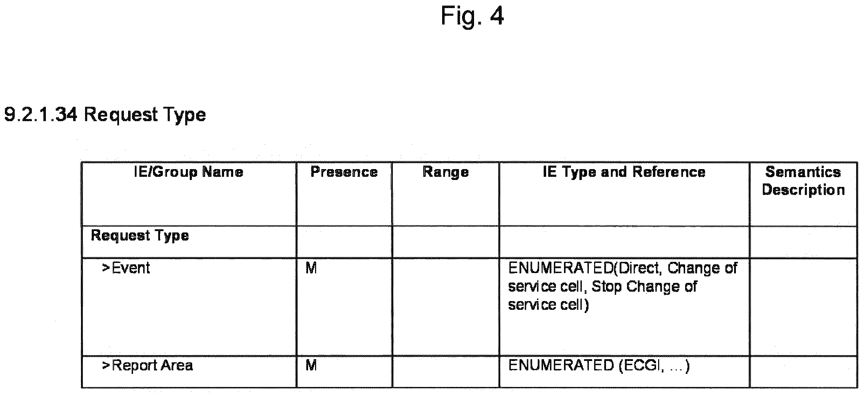

Note that the condition information may be information that is included in Request Type IE. Fig.4 illustrates an example of the condition information included in Request Type IE. Here, the condition information corresponds to Event information illustrated in Fig.4. The Event represents a condition that a device receiving information illustrated in Fig.4 transmits the location information on the terminal device 400 to another device. The Event is information indicating any one of "Direct", "Change of serving cell" and "Stop Change of serving cell."

Further, when the Event is information indicating "Direct", the base station that has received the information transmits the location information on the terminal device 400 to the uplink device 500 or the gateway 300.

When the Event is information indicating "Change of serving cell", the base station that has received the information transmits the location information on the terminal device 400 to the uplink device 500 or the gateway 300 if the serving cell is changed.

When the Event is information indicating "Stop Change of serving cell," the base station that has received the information stops transmitting the location information on the terminal device 400 to the uplink device 500 or the gateway 300.

Note that the location information on the terminal device 400 may be at least either an ECGI (E-UTRAN Cell Global ID) or a TAI (Tracking Area ID).

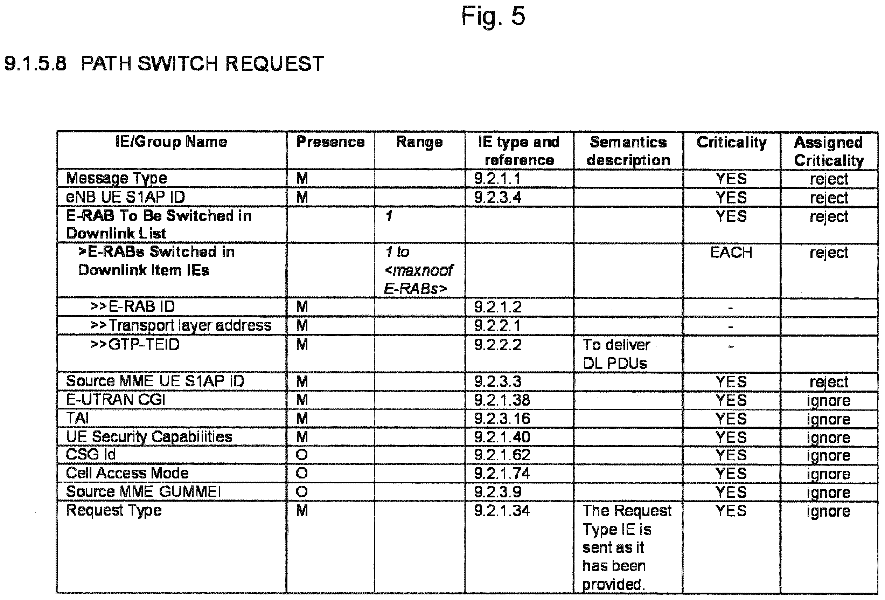

Further, the condition information may be included in a Path Switch Request message. As an example, Fig.5 illustrates an example of the condition information that is included in a Request Type IE and the Request Type IE that is included in the Path Switch Request message.

Note that the gateway 300 may be an HeNB-GW, the first base station 100 and the second base station 200 may be HeNBs, and the uplink device 500 may be an MME.

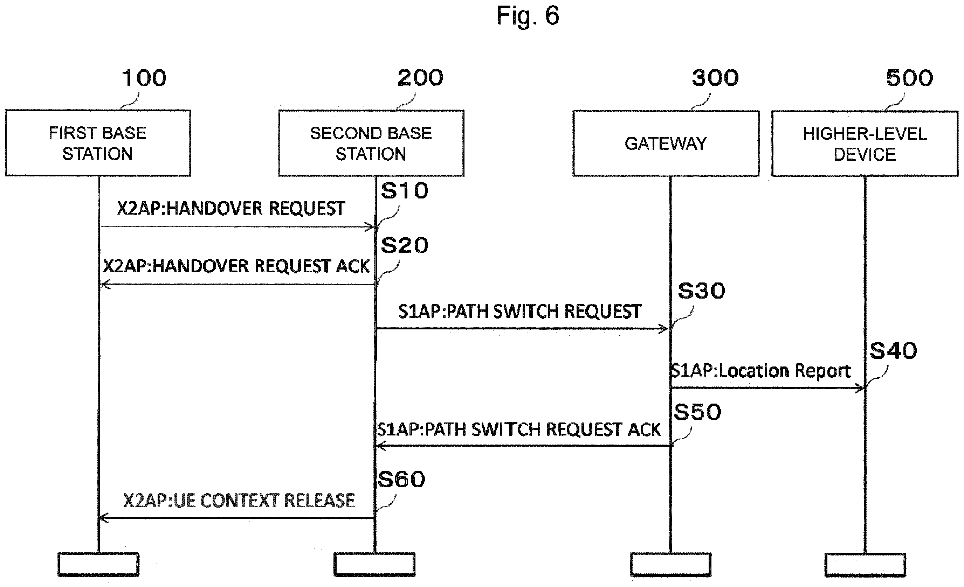

Next, operations of the communication system according to the present example embodiment will be described with reference to Fig.6. As an example, Fig.6 illustrates a case of the condition information that is included in the Request Type IE and the Request Type IE that is included in the Path Switch Request message.

When the terminal device 400 conducts the X2HO from the external base station to the first base station 100 and further conducts X2-handover from the first base station 100 to the second base station 200, at step S10, the first base station 100 transmits, to the second base station 200, the Handover Request message. The Handover Request message includes the Request Type IE. Note that the Request Type IE includes the condition information.

At step S20, the second base station 200 transmits, to the first base station 100, the Handover Request Ack message.

At step S30, the second base station 200 transmits the Path Switch Request message to the gateway 300. The Path Switch Request message includes the Request Type IE. Note that the Request Type IE includes the condition information.

Note that the gateway 300 which receives the Path Switch Request message from the second base station 200 conducts a process of a path switching from the first base station 100 to the second base station 200, and further, based on the condition information included in the Path Switch Request message, determines whether to transmit the location information on the terminal device 400 to the uplink device 500. Specifically, when the condition information in the Path Switch Request message that is received from the second base station 200 indicates that the serving cell is changed under a condition for the gateway 300 to transmit the location information on the terminal device 400 to the uplink device 500, the gateway 300 conducts operations of step S40. On the other hand, when the condition information in the Path Switch Request message that is received from the second base station 200 indicates that the serving cell is not changed under the condition for the gateway 300 to transmit the location information on the terminal device 400 to the uplink device 500, the gateway 300 conducts operations of step S50 and steps thereafter instead of conducting operation of step S40.

At step S40, the gateway 300 transmits the location information on the terminal device 400 to the uplink device 500. Note that the location information on the terminal device 400 may be included in the Location Report message.

At step S50, the gateway 300 transmits the Path Switch Request Ack message to the second base station 200.

At step S60, the second base station 200 transmits an UE Context Release message to the first base station 100.

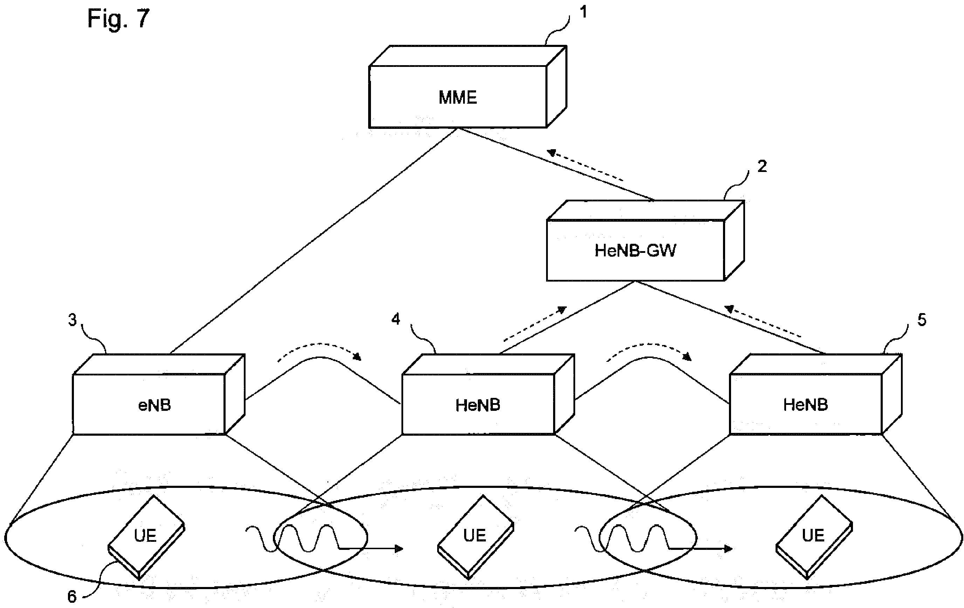

According to the present example embodiment, for example, following problems can be solved. Fig.7 illustrates an example communication system. The communication system illustrated in Fig.7 includes an MME1, an HeNB-GW2, an eNB3, an HeNB4, an HeNB5 and a UE6.

The HeNB4 and the HeNB5 are terminated by the HeNB-GW2. On the other hand, the eNB3 is not terminated by the HeNB-GW2. The MME1 is connected with the eNB3 and the HeNB-GW2. First, when the UE6 is connected with the eNB3, the MME1 transmits, to the eNB3, information on condition (Event parameter of Request Type IE) for reporting, to the MME1, the location information on the UE6 (hereinafter referred to as "condition information"). Note that the condition information may be included in the Location Reporting Control message.

Hereinafter, as an example, description is based on an example where the condition information is equivalent to a change of the serving cell (Event=Change of serving cell).

When the UE6 conducts a handover from the eNB3 to the HeNB4, the HeNB4 transmits the Path Switch Request message to the HeNB-GW2. The Path Switch Request message includes the location information (ECGI and TAI) on the UE6. The HeNB-GW2 that receives the Path Switch Request message then transmits the Path Switch Request message to the MME1 for switching a path established between the eNB3 and the MME1 to a path between the HeNB-GW2 and the MME1. The Path Switch Request message transmitted from the HeNB-GW2 also includes the location information (ECGI and TAI) on the UE6. Accordingly, the HeNB-GW2 can transmit the location information on the UE6 to the MME1.

Alternatively, when the UE6 conducts a handover from the HeNB4 to the HeNB5, the HeNB5 transmits the Path Switch Request message to the HeNB-GW2. Here, the handover from the HeNB4 to the HeNB5 is terminated at the HeNB-GW2 because the HeNB4 and the HeNB5 pertain to the same HeNB-GW2. In other words, when the UE6 conducts the handover from the HeNB4 to the HeNB5, a device at a level higher than that of the HeNB-GW2 does not need to switch the path. Therefore, the HeNB-GW2 does not transmit the Path Switch Request message to the MME1. Accordingly, in this case, the MME1 does not receive the location information on the UE6.

Further, as a trigger for the base station (for example, eNB and HeNB) to transmit the location information on the UE to the uplink device (for example, MME), the Location Report message may be transmitted in response to receiving the Location Reporting Control message from the uplink device. However, at the time of the X2HO, the Location Report message is not transmitted because when an S1AP message such as the Path Switch Request message is transmitted, such message includes an ECGI (E-UTRAN Cell Global ID) or a TAI (Tracking Area ID). Therefore, in the case that the UE6 conducts the handover from the HeNB4 to the HeNB5, when the HeNB-GW2 receives the Path Switch Request message, not only switching of paths in the HeNB-GW2 but also determining whether to transmit the location information on the UE6 to the MME1 is needed. However, according to the current standard 3GPP (3rd Generation Partnership Project), the HeNB-GW2 does not have information needed for the determination. Therefore, the HeNB-GW2 may not determine whether the location information on the UE6 needs to be transmitted to the MME1.

As a solution to the above described problem, according to the present example embodiment, the second base station 200 transmits the condition information to the gateway 300, so that the gateway 300 can determine whether to transmit the location information on the terminal device 400 to the uplink device 500. Accordingly, the gateway 300 can appropriately transmit the location information on the terminal device 400 to the uplink device 500.

### <Second Example Embodiment>

In the first example embodiment, the base station transmits, to the gateway, information on the condition for the gateway to transmit the location information on the terminal device to the uplink device, thereby the gateway can appropriately transmit the location information on the terminal device to the uplink device.

Subsequently, according to the second example embodiment, when the gateway receives the Path Switch Request message from the subordinate base stations, the gateway, by necessity, transmits, to the uplink device, the location information on the terminal device to enable the gateway to certainly transmit, to the uplink device, the location information on the terminal device.

Note that the configuration example of the communication system according to the present example embodiment is the same as that of the first example embodiment. Further, a first base station 110, a second base station 210, a gateway 310, a terminal device 410 and an uplink device 510 of the present example embodiment respectively correspond to the first base station 100, the second base station 200, the gateway 300, the terminal device 400 and the uplink device 500 of the first example embodiment.

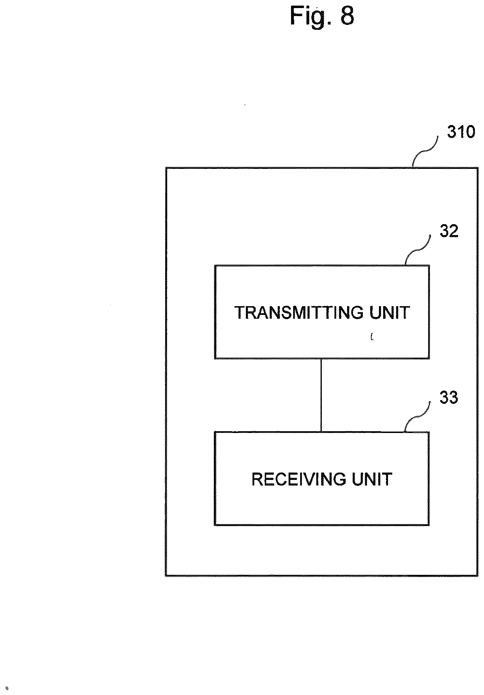

Fig.8 illustrates a configuration example of the gateway 310 according to the second example embodiment.

The gateway 310 at least includes the transmitting unit 32 and the receiving unit 33.

The transmitting unit 32 transmits, to the uplink device 510, information on a location of the terminal device 410 (hereinafter referred to as "the location information on the terminal device 410") which information is included in the Path Switch Request message.

The receiving unit 33 receives, from the second base station 210, information on a condition (Event parameter of Request Type IE) for transmitting the location information on the terminal device 410 (hereinafter referred to as "condition information") to the uplink device 510.

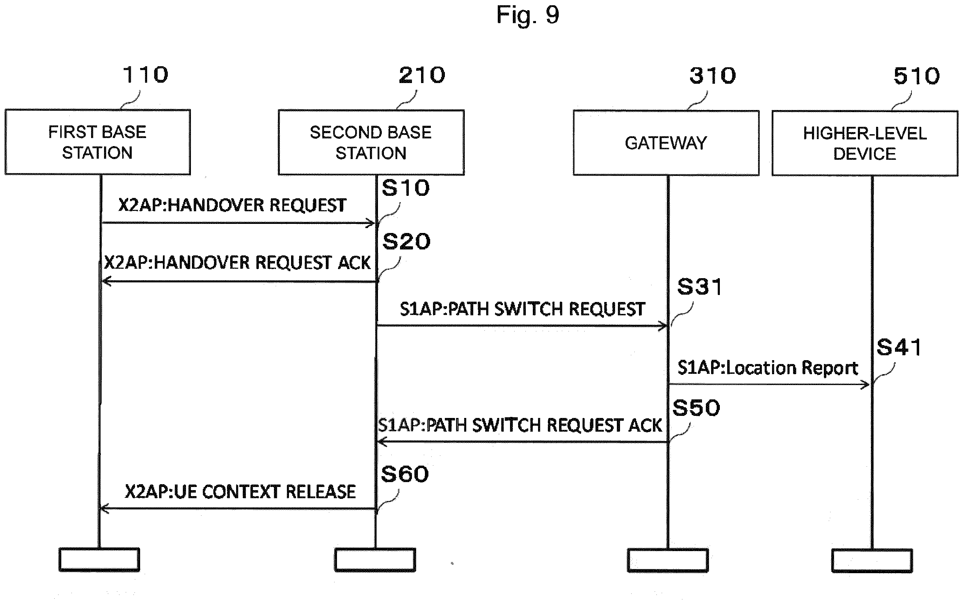

Next, operations of the communication system according to the present example embodiment are described with reference to Fig.9

Steps S10, S20, S50, and S60 are the same as the steps in the first example embodiment.

At step S31, the second base station 210 transmits, to the gateway 310, the Path Switch Request message. Note that the present example embodiment is different from the first example embodiment in that in the former, the Path Switch Request message does not need to include the condition information.

At step S41, the gateway 310 transmits the location information on the terminal device 410 to the uplink device 510. Note that the location information on the terminal device 410 may be included in the Location Report message.

In the communication system according to the present example embodiment, the gateway 310 can transmit, to the uplink device 510, the location information on the terminal device 410 without changing the Path Switch Request message that is transmitted from the second base station 210 to the gateway 310.

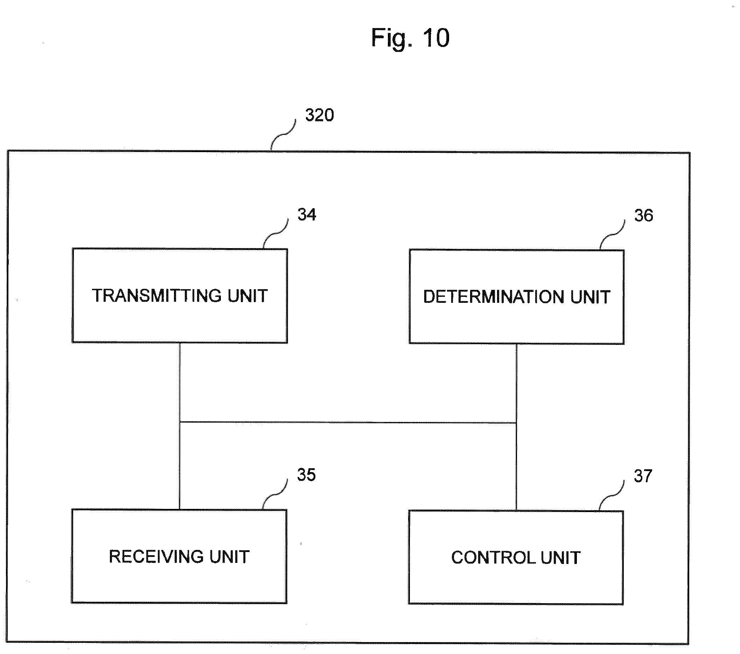

Note that the gateway 300 or 310 according to each of the above described example embodiments may have a configuration other than the configuration illustrated in Fig.3 or Fig.8. Fig.10 illustrates a configuration of a gateway 320 that is a variation of the gateway according to each of the above described example embodiments.

The gateway 320 at least includes a transmitting unit 34, a receiving unit 35, a determination unit 36 and a control unit 37.

The transmitting unit 34 is the same as the transmitting unit 30 or the transmitting unit 32.

The receiving unit 35 is the same as the receiving unit 31 or the receiving unit 33.

The determination unit 36 determines whether to transmit, to the uplink device, the location information on the terminal device based on information received by the receiving unit 35. For example, when the Path Switch Request message received by the receiving unit 35 includes the Request Type IE, and the Request Type IE indicates "Event=Change of serving cell," the determination unit of the gateway according to the first example embodiment determines to transmit, to the uplink device, the terminal device's location information which is included in the Path Switch Request message.

The control unit 37 controls components included in the gateway 320.

Each processing according to the above described example embodiments may be conducted by software. More specifically, a CPU of an information processing device may read and execute a computer program for conducting each processing. It is possible to conduct processing having the same content as that of the processing of the above described example embodiments even when each processing is conducted using the program. Further, the above described program may be stored in a non-transitory medium such as an ROM (Read Only Memory), an RAM (Random Access Memory), a semiconductor storage such as a flash memory, an optical disc, a magnetic disc, and a magnet optical disc.

### [Reference signs List]

- 1: MME
- 2: HeNB-GW
- 3: eNB
- 4, 5: HeNB
- 20, 31, 33, 35: Receiving unit
- 21, 30, 32, 34: Transmitting unit
- 36: Determination unit
- 37: Control unit
- 100, 110: First base station
- 200, 210: Second base station
- 300, 310, 320: Gateway
- 6, 400: UE
- 500, 510: Uplink device

## Claims

1. A radio communication system which includes a first type base station (3) connected to an uplink device (1, 500), a plurality of second type base stations (4, 5, 100, 200) connected to a gateway (2, 300) as home base stations under the gateway (2,300), wherein the gateway (2, 300) is connected to the uplink device (1, 500), and the system further includes a terminal device (6, 400) which receives a communication service through one of the first type base station (3) and the plurality of second type base stations (4, 5, 100, 200), wherein:
the gateway (2, 300) is configured to terminate a processing of X2 handover between the second type base stations (4, 5, 100, 200);
the uplink device (1, 500) is configured to transmit condition information, which indicates a condition for transmitting location information on the terminal device (6) to the uplink device (1, 500), to the first type base station (3) when the terminal device (6) is connected with the first type base station (3); and
each of the plurality of second type base stations (4, 5, 100, 200) is configured to transmit a Path Switch Request message to the gateway (2, 300) when operating as a target base station of X2 handover conducted by the terminal device (6),
wherein, when the terminal device (6) conducts a first X2 handover from the first type base station (3) to a first one of the plurality of second type base stations (4, 100) and further conducts a second X2 handover from the first one of the plurality of second type base stations (4, 100) to a second one of the plurality of second type base stations (5, 200), the first one of the plurality of second type base stations (4, 100) is further configured to transmit a Handover Request message (S10) including the condition information to the second one of the plurality of second type base stations (5, 200), and the second one of the plurality of second type base stations (5,200) is further configured to include the condition information in the Path Switch Request message and transmit the Path Switch Request message including the condition information (S30) to the gateway (2, 300), and
wherein the gateway (2,300) is further configured to conduct a process of a path switching for the second X2 handover based on the Path Switch Request message received from the second one of the plurality of second type base stations (5, 200), and to determine whether to transmit the location information on the terminal device (6) to the uplink device (1, 500) based on the condition information included in the Path Switch Request message.

2. The radio communication system according to claim 1, wherein the condition information to transmit location information on the terminal device (6) to the uplink device (1, 500) is included in a Request Type IE, and the target base station includes the Request Type IE in the Path Switch Request message which is transmitted to the gateway (2, 300).

3. A method in a radio communication system which includes a first type base station (3) connected to an uplink device (1, 500), a plurality of second type base stations (4, 5, 100, 200) connected to a gateway (2, 300) as home base stations under the gateway (2, 300), wherein the gateway (2, 300) is connected to the uplink device (1, 500), and the system further includes a terminal device (6, 400) which receives a communication service through one of the first type base station (3) and the plurality of second type base stations (4, 5, 100, 200), the method comprising:
transmitting, by the uplink device (1, 500), condition information, which indicates a condition for transmitting location information on the terminal device (6) to the uplink device (1, 500), to the first type base station (3) when the terminal device (6) is connected with the first type base station (3);
transmitting, by each of the second type base stations (4, 5, 100, 200), a Path Switch Request message to the gateway (2, 300) when operating as a target base station of X2 handover conducted by the terminal device (6); and
terminating, by the gateway (2, 300), a processing of X2 handover between the second type base stations (4, 5, 100, 200),
wherein when the terminal device (6) conducts a first X2 handover from the first type base station (3) to a first one of the plurality of second type base stations (4, 100) and further conducts a second X2 handover from the first one of the plurality of second type base stations (4, 100) to a second one of the plurality of second type base stations (5, 200), the method comprises
transmitting, by the first one of the plurality of second type base stations (4, 100), a Handover Request message (S10) including the condition information to the second one of the plurality of second type base stations (5, 200);
including, by the second one of the plurality of second type base stations (5, 200), the condition information in the Path Switch Request message, and transmitting the Path Switch Request message including the condition information (S30) to the gateway (2, 300); and
conducting, by the gateway (2, 300), a process of a path switching for the second X2 handover based on the Path Switch Request message received from the second one of the plurality of second type base stations (5, 200), and determining whether to transmit the location information on the terminal device (6) to the uplink device (1, 500) based on the condition information included in the Path Switch Request message.

## Patentansprüche

1. Funkkommunikationssystem, das aufweist: eine Basisstation (3) von einem ersten Typ, die mit einer Uplink-Vorrichtung (1, 500) verbunden ist, mehrere Basisstationen (4, 5, 100, 200) von einem zweiten Typ, die mit einem Gateway (2, 300) als Heimbasisstationen unter dem Gateway (2, 300) verbunden sind, wobei das Gateway (2, 300) mit der Uplink-Vorrichtung (1, 500) verbunden ist, und wobei das System ferner eine Endgerätvorrichtung (6, 400) aufweist, die einen Kommunikationsdienst durch eine der Basisstation (3) vom ersten Typ und der mehreren Basisstationen (4, 5, 100, 200) vom zweiten Typ empfängt, wobei:
das Gateway (2, 300) konfiguriert ist, um eine Verarbeitung der X2-Weitergabe zwischen den Basisstationen (4, 5, 100, 200) vom zweiten Typ zu beenden;
die Uplink-Vorrichtung (1, 500) konfiguriert ist, um Bedingungsinformationen, die eine Bedingung für die Übertragung von Standortinformationen auf der Endgerätvorrichtung (6) an die Uplink-Vorrichtung (1, 500) anzeigen, an die Basisstation (3) vom ersten Typ zu übertragen, wenn die Endgerätvorrichtung (6) mit der Basisstation (3) vom ersten Typ verbunden ist; und
jede der mehreren Basisstationen (4, 5, 100, 200) vom zweiten Typ konfiguriert sind, um eine Path-Switch-Request-Nachricht an das Gateway (2, 300) zu übertragen, wenn sie als eine Zielbasisstation der X2-Weitergabe arbeitet, die von der Endgerätvorrichtung (6) durchgeführt wird,
wobei, wenn die Endgerätvorrichtung (6) eine erste X2-Weitergabe von der Basisstation (3) vom ersten Typ an eine erste der mehreren Basisstationen (4, 100) vom zweiten Typ durchführt und ferner eine zweite X2-Weitergabe von der ersten der mehreren Basisstationen (4, 100) vom zweiten Typ an eine zweite der mehreren Basisstationen (5, 200) vom zweiten Typ durchführt, die erste der mehreren Basisstationen (4, 100) vom zweiten Typ ferner konfiguriert ist, um eine Weitergabeanforderungsnachricht (S10), welche die Bedingungsinformationen aufweist, an die zweite der mehreren Basisstationen (5, 200) vom zweiten Typ zu übertragen, und die zweite der mehreren Basisstationen (5, 200) vom zweiten Typ ferner konfiguriert ist, um die Bedingungsinformationen in die Path-Switch-Request-Nachricht aufzunehmen und die Path-Switch-Request-Nachricht, welche die Bedingungsinformationen (S30) aufweist, an das Gateway (2, 300) zu übertragen, und
wobei das Gateway (2, 300) ferner konfiguriert ist, um basierend auf der Path-Switch-Request-Nachricht, die von der zweiten der mehreren der mehreren Basisstationen (5, 200) vom zweiten Typ empfangen wird, ein Verfahren eines Wegumschaltens für die zweite X2-Weitergabe durchzuführen, und basierend auf den Bedingungsinformationen, die in der Path-Switch-Request-Nachricht enthalten sind, zu bestimmen, ob die Standortinformationen auf der Endgerätvorrichtung (6) an die Uplink-Vorrichtung (1, 500) übertragen werden sollen.

2. Funkkommunikationssystem nach Anspruch 1, wobei die Bedingungsinformationen für das Übertragen von Standortinformationen auf der Endgerätvorrichtung (6) an die Uplink-Vorrichtung (1, 500) in einem Anforderungstyp-IE enthalten sind, und die Zielbasisstation das Anforderungstyp-IE in der Path-Switch-Request-Nachricht aufweist, die an das Gateway (2, 300) übertragen wird.

3. Verfahren in einem Funkkommunikationssystem, das eine Basisstation (3) von einem ersten Typ, die mit einer Uplink-Vorrichtung (1, 500) verbunden ist, mehrere Basisstationen (4, 5, 100, 200) von einem zweiten Typ, die mit einem Gateway (2, 300) als Heimbasisstationen unter dem Gateway (2, 300) verbunden sind, aufweist, wobei das Gateway (2, 300) mit der Uplink-Vorrichtung (1, 500) verbunden ist, und wobei das System ferner eine Endgerätvorrichtung (6, 400) aufweist, die einen Kommunikationsdienst durch eine der Basisstation (3) vom ersten Typ und der mehreren Basisstationen (4, 5, 100, 200) vom zweiten Typ empfängt, wobei das Verfahren aufweist:
Übertragen von Bedingungsinformationen, die eine Bedingung für die Übertragung von Standortinformationen auf der Endgerätvorrichtung (6) an die Uplink-Vorrichtung (1, 500) anzeigen, an die Basisstation (3) vom ersten Typ, wenn die Endgerätvorrichtung (6) mit der Basisstation (3) vom ersten Typ verbunden ist, durch die Uplink-Vorrichtung (1, 500);
Übertragen einer Path-Switch-Request-Nachricht an das Gateway (2, 300), wenn sie als eine Zielbasisstation der X2-Weitergabe arbeitet, die von der Endgerätvorrichtung (6) durchgeführt wird, durch jede der mehreren Basisstationen (4, 5, 100, 200) vom zweiten Typ; und
Beenden einer Verarbeitung der X2-Weitergabe zwischen den Basisstationen (4, 5, 100, 200) vom zweiten Typ durch das Gateway (2, 300),
wobei, wenn die Endgerätvorrichtung (6) eine erste X2-Weitergabe von der Basisstation (3) vom ersten Typ an eine erste der mehreren Basisstationen (4, 100) vom zweiten Typ durchführt und ferner eine zweite X2-Weitergabe von der ersten der mehreren Basisstationen (4, 100) vom zweiten Typ an eine zweite der mehreren Basisstationen (5, 200) vom zweiten Typ durchführt, das Verfahren aufweist:
Übertragen einer Weitergabeanforderungsnachricht (S10), welche die Bedingungsinformationen aufweist, an die zweite der mehreren Basisstationen (5, 200) vom zweiten Typ durch die erste der mehreren Basisstationen (4, 100) vom zweiten Typ;
Aufnehmen der Bedingungsinformationen in die Path-Switch-Request-Nachricht und Übertragen der Path-Switch-Request-Nachricht, welche die Bedingungsinformationen (S30) aufweist, an das Gateway (2, 300) durch die zweite der mehreren Basisstationen (5, 200) vom zweiten Typ, und
basierend auf der Path-Switch-Request-Nachricht, die von der zweiten der mehreren der mehreren Basisstationen (5, 200) vom zweiten Typ empfangen wird, Durchführen eines Verfahrens eines Wegumschaltens für die zweite X2-Weitergabe, und basierend auf den Bedingungsinformationen, die in der Path-Switch-Request-Nachricht enthalten sind, Bestimmen, ob die Standortinformationen auf der Endgerätvorrichtung (6) an die Uplink-Vorrichtung (1, 500) übertragen werden sollen, durch das Gateway (2, 300).

## Revendications

1. Système de communication radio qui comprend une station de base de premier type (3) connectée à un dispositif de liaison montante (1, 500), une pluralité de stations de base de deuxième type (4, 5, 100, 200) connectées à une passerelle (2, 300) comme des stations de base de rattachement sous la passerelle (2, 300), dans lequel la passerelle (2, 300) est connectée au dispositif de liaison montante (1, 500), et le système comprend en outre un dispositif terminal (6, 400) qui reçoit un service de communication par l'intermédiaire de l'une de la station de base de premier type (3) et de la pluralité de stations de base de deuxième type (4, 5, 100, 200), dans lequel :
la passerelle (2, 300) est configurée pour terminer un traitement de transfert X2 entre les stations de base de deuxième type (4, 5, 100, 200) ;
le dispositif de liaison montante (1, 500) est configuré pour transmettre des informations de condition, qui indiquent une condition pour transmettre des informations de localisation sur le dispositif terminal (6) au dispositif de liaison montante (1, 500), à la station de base de premier type (3) lorsque le dispositif terminal (6) est connecté avec la station de base de premier type (3) ; et
chacune de la pluralité de stations de base de deuxième type (4, 5, 100, 200) est configurée pour transmettre un message de demande de commutation de trajet à la passerelle (2, 300) lors d'un fonctionnement comme une station de base cible de transfert X2 réalisé par le dispositif terminal (6),
dans lequel, lorsque le dispositif terminal (6) réalise un premier transfert X2 de la station de base de premier type (3) à une première de la pluralité de stations de base de deuxième type (4, 100) et réalise en outre un deuxième transfert X2 de la première de la pluralité de stations de base de deuxième type (4, 100) à une deuxième de la pluralité de stations de base de deuxième type (5, 200), la première de la pluralité de stations de base de deuxième type (4, 100) est en outre configurée pour transmettre un message de demande de transfert (S10) incluant les informations de condition à la deuxième de la pluralité de stations de base de deuxième type (5, 200), et la deuxième de la pluralité de stations de base de deuxième type (5, 200) est en outre configurée pour inclure les informations de condition dans le message de demande de commutation de trajet et transmettre le message de demande de commutation de trajet incluant les informations de condition (S30) à la passerelle (2, 300), et
dans lequel la passerelle (2, 300) est en outre configurée pour réaliser un processus d'une commutation de trajet pour le deuxième transfert X2 sur la base du message de demande de commutation de trajet reçu en provenance de la deuxième de la pluralité de stations de base de deuxième type (5, 200), et pour déterminer s'il faut transmettre les informations de localisation sur le dispositif terminal (6) au dispositif de liaison montante (1, 500) sur la base des informations de condition incluses dans le message de demande de commutation de trajet.

2. Système de communication radio selon la revendication 1, dans lequel les informations de condition pour transmettre des informations de localisation sur le dispositif terminal (6) au dispositif de liaison montante (1, 500) sont incluses dans un IE de type de demande, et la station de base cible inclut l'IE de type de demande dans le message de demande de commutation de trajet qui est transmis à la passerelle (2, 300).

3. Procédé dans un système de communication radio qui comprend une station de base de premier type (3) connectée à un dispositif de liaison montante (1, 500), une pluralité de stations de base de deuxième type (4, 5, 100, 200) connectées à une passerelle (2, 300) comme des stations de base de rattachement sous la passerelle (2, 300), dans lequel la passerelle (2, 300) est connectée au dispositif de liaison montante (1, 500), et le système comprend en outre un dispositif terminal (6, 400) qui reçoit un service de communication par l'intermédiaire de l'une de la station de base de premier type (3) et de la pluralité de stations de base de deuxième type (4, 5, 100, 200), le procédé comprenant :
la transmission, par le dispositif de liaison montante (1, 500), d'informations de condition, qui indiquent une condition pour transmettre des informations de localisation sur le dispositif terminal (6) au dispositif de liaison montante (1, 500), à la station de base de premier type (3) lorsque le dispositif terminal (6) est connecté avec la station de base de premier type (3) ;
la transmission, par chacune des stations de base de deuxième type (4, 5, 100, 200), d'un message de demande de commutation de trajet à la passerelle (2, 300) lors d'un fonctionnement comme une station de base cible de transfert X2 réalisé par le dispositif terminal (6) ; et
la terminaison, par la passerelle (2, 300), d'un traitement de transfert X2 entre les stations de base de deuxième type (4, 5, 100, 200),
dans lequel lorsque le dispositif terminal (6) réalise un premier transfert X2 de la station de base de premier type (3) à une première de la pluralité de stations de base de deuxième type (4, 100) et réalise en outre un deuxième transfert X2 de la première de la pluralité de stations de base de deuxième type (4, 100) à une deuxième de la pluralité de stations de base de deuxième type (5, 200), le procédé comprend
la transmission, par la première de la pluralité de stations de base de deuxième type (4, 100), d'un message de demande de transfert (S10) incluant les informations de condition à la deuxième de la pluralité de stations de base de deuxième type (5, 200) ;
l'inclusion, par la deuxième de la pluralité de stations de base de deuxième type (5, 200), des informations de condition dans le message de demande de commutation de trajet, et la transmission du message de demande de commutation de trajet incluant les informations de condition (S30) à la passerelle (2, 300) ; et
la réalisation, par la passerelle (2, 300), d'un processus d'une commutation de trajet pour le deuxième transfert X2 sur la base du message de demande de commutation de trajet reçu en provenance de la deuxième de la pluralité de stations de base de deuxième type (5, 200), et la détermination de s'il faut transmettre les informations de localisation sur le dispositif terminal (6) au dispositif de liaison montante (1, 500) sur la base des informations de condition incluses dans le message de demande de commutation de trajet.
